# EUROPEAN PATENT SPECIFICATION

(11) **EP 4 102 471 B1**
(45) Date of publication and mention of the grant of the patent: **06.03.2024**
(21) Application number: 22020267.5
(22) Date of filing: 20.04.2018
(51) Int. Cl.: G06V 10/10, G06V 30/10, H01B 7/36

(54) **METHOD FOR IDENTIFYING WIRE MARKINGS**
VERFAHREN ZUR IDENTIFIZIERUNG VON DRAHTMARKIERUNGEN
PROCÉDÉ D'IDENTIFICATION DE MARQUAGE DE CÂBLES

(30) Priority: 21.04.2017 PL 42136817
(43) Date of publication of application: 14.12.2022
(62) Divisional of application: 18460023.7
(73) Proprietor: DTP spólka z ograniczona odpowiedzialnoscia, 66-002 Zielona Góra (PL)
(72) Inventor: ADASZYNSKI, Marek, 66-008 Wilkanowo (PL); CIEBIERA, Krzysztof, 36-060 Glogów Malopolski (PL); DIKS, Krzysztof, 96-100 Skierniewice (PL); KOZLOWSKI, Tomasz, 65-119 Zielona Góra (PL); SZAJNA, Andrzej, 66-003 Droszków (PL); SZAJNA, Janusz, 66-200 Rosin (PL); ZUBOWICZ, Czeslaw, 66-015 Zielona Góra (PL); ZYCIAK, Mariusz, 65-762 Zielona Góra (PL)

(56) References cited:
- EP-B1- 0 554 136
- CN-A- 104 820 827
- CN-A- 104 820 985
- JP-A- H05 159 098

## Description

The item of the current invention is the device for identifying wire markings and the method of identifying the wire's markings having a direct application in recognising and reading the markings printed on the wires, especially in the automated production environments and the assembly systems.

The wires are marked with the sequence of the signs using the raster fonts, i.e. pixilation composed of dots creating a symbol in a definite square sign matrix.

The device for identifying the markings and the identification method must perform the task within the scope of image recognition, and especially in optical character recognition. The markings identification method is built based on deep convolutional neural networks. In fact the recognition of the markings printed on the wires is not always effective due to the defects and the distortion of the print being the result of namely bending and twirling of the wires, the print tilting from the matrix, blurring and rubbing off or the lack of print points.

The process of both natural and artificial recognition of the image is composed of the image acquisition, image processing i.e. the initial filtration, the elimination of the distortions, image compression and the exposition of the primary features etc, the image analysis i.e. the identification of the characteristic features of the image, image recognition and its semantic interpretation (see: Ryszard Tadeusiewicz, Przemyslaw Korohoda, "Computerised Image Analysis and Processing", Wydawnictwo Fundacji Post 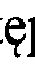 pu Telekomunikacji, Kraków 1997, p.11). The standard visual system for image processing comprises the module for image introduction, image display device, permanent copy device, auxiliary storage, image processor (as the source above p. 12).

In technology the image is understood as a two dimensional analogue signal (less often three-dimensional), which is being modelled and transformed into the digital signal (see: Malgorzata Zygarlicka, PhD dissertation titled "Selected methods of image processing in time-frequency analyses on the example of the interferences in the energy networks", Opole University of Technology - Faculty of Electrical Engineering Automatic Control and Informatics, p. 11).

The image recognition has been largely automated with the application of the analytical methods using the algorithms as well as the methods of artificial intelligence with the neural networks. There are numerous advanced solutions allowing for the search of the definite items or the identification of the definite image properties. A specific area of the application is the automatization in photography with the systems of automatic face recognition, closed eyes and squinting elimination, smile capture or definite animal identification, for example cats and dogs. The solutions are known from the patent descriptions US9367730 and US9208575. The image recognition is more and more widely used in the automotive industry in the systems of active safety in which the camera image or infrared image is analysed in order to identify people or animals in the potential collision position with the moving vehicle. The solutions are known from the patent descriptions US8384534 and US9361575.

One of the first area of image recognition was the optical character recognition OCR. The dynamic development in this sphere took place in the nineties of the twentieth century. Then it was the beginning of the research into the application of the neural network for the recognition of signs and handwriting. The solutions are known from the patent descriptions: US5052043, US5712922, US5625707, US5048097, US5542006, US5742702, US6101270.

From the patent description JPH05159098 the method of recognizing the gaps between the signs is known, in which first the signs are being recognized and then the gaps between the sign are being identified when the gap is bigger than the threshold value established on the average sign gap. The initial entry image device is supplied with the scanner which optically reads the document, RAM stores the image document read by the initial entry image device. The segmentation of the image takes place and the algorithm calculates the average gap value between the signs in the sequence being introduces, calculates the average gap between the signs through the definition of the average value of the signs lower than the threshold value, compares it with the threshold value and when the space between the signs is bigger than the threshold one established on the average interval, the gap can be recognized as being empty. The most current solutions in the image recognition have been dominated by the applications of the convolutional neural networks which structure in the most natural way is adjusted to the analysis of two-dimensional data for the search of the definite patterns. The examples of the neural networks applications for image recognition can be traced in the application description US20170083796 and in the following publications:
- Max Jaderberg, Karen Simonyan, Andrea Vedaldi, Andrew Zisserman: Reading Text in the Wild with Convolutional Neural Networks, © Springer Science+Business Media New York 2015;
- Palka Jan, Palka Jiri, Navratil Milan: OCR systems based on convolutional neocognitron network, INTERNATIONAL JOURNAL OF MATHEMATICAL MODELS AND METHODS IN APPLIED SCIENCES, Issue 7, Volume 5, 2011;
- Christian Gerber, Mokdong Chung: Number Plate Detection with a Multi-Convolutional Neural Network Approach with Optical Character Recognition for Mobile Devices, Journal of Information Processing Systems 2016; 12(1): 100-108;
- Dae-Gun Ko, Su-Han Song, Ki-Min Kang, and Seong-Wook Han: Convolutional Neural Networks for Character-level Classification, IEIE Transactions on Smart Processing and Computing, vol. 6, no. 1, February 2017.

From the application description US2012033852 the system and the method of item recognition based on glyphs are known. The system incorporates the following interacting elements: camera, light source, memory, lens system, power supply, microprocessor controlling the software used for item recognition.

The attempt to create an automatic reading of the wire's markings is the invention revealed in the patent application CN104820827 according to which the signs in the dot format with the application of Otsu algorithm are recognized and the number of dots in the sign is defined, the image is binarized with the threshold method, the binary image is filtered, the distortions are eliminated, the dots comprising the particular signs are distracted with the morphological method, the image is being segmented, the slope of the signs is corrected, each of the signs is separated and isolated separately, then the signs are being compared and each of them adjusted with the matrix in order to identify the sign image. The application does not reveal the device for recognizing the wire's markings.

Despite the dynamic development of the image recognition techniques the market lacks the solutions enabling the automatic identification of alphanumerical wire markings. The complex solutions providing all-embracing packaging of the wires used in the industry although covering the advanced marking print solutions do not have the ability to identify the markings. The aspects differentiating this area from the widely developed solutions of automatic sign recognition are: small sizes i.e. the diameter of the wires, the curvature if the print gap, bending and twirling of the wires in the process of manufacturing, printing defects. The aspects result in many problems which do not appear in other spheres of automatic sign recognition. The main problems connected with the particular aspects of the specificity of marking are as follows:
- small sizes i.e. the diameter of the wires - resulting in the necessity to apply small sign matrices (for instance 5x5 pixels) what to a great extent reduces the possibility to differentiate the appearance of the signs.
- the curvature if the print gap resulting in the unfavourable phenomena connected with the equal light exposure, shadows, reflexes, decrease of the view homogeneousness within the scope of single sings,
- bending and twirling of the wires resulting in non-linear positioning of the signs in marking and very often in incomplete view of all the signs from one point of observation,
- printing defects - high speed printing applied in the wires marking in the industrial environment cause the deformation of signs in the form of nonlinear transference of the sign matrix, ink blurring, lack of some of the print points - what in the case of small matrices causes huge differences form the pattern.

The controlling systems include a numerous number of electric connections transferred through the wires. Each technological line, production node or the automatic logistic process require the implementation of the individually designed controlling set. In the modern production processes of the controlling sets the packaging of wires is being used. The wires are signed with the printed alphanumerical markings in the ink print technology. The problems in the identification of the markings described in the state of the art have not been defeated so far and there is a clear lack of the automatic recognition of the wire's markings solution. The identification of the particular wires in the assembly process of the controlling sets relies on reading the markings by the assembly crew. It is a time-consuming process with a high risk of committing an error due to the small sizes of the markings and their syntax and thus relatively costly. The aim of the current invention is the automatization of the identification of the wire's markings what will enable the significant cost lowering of the controlling systems manufacturing through assembly time shortening, improving the prevention of assembly errors and higher degree of quality assurance integration.

The above objective has been achieved by the construction of the device for identifying wire markings and the method for identifying wire markings in accordance with the invention.

The device for identifying wire markings comprising a camera, a microcomputer, a lighting system and a monitor according to the invention is characterized in that it has Favourably and optionally the housing, the upper wall of which is equipped with a monitor inclined at an angle of 12 to 18 degrees with respect to the horizontal plane of the device, inside the housing, beyond a camera observation field, connected to the camera, there is a microcomputer with a power supply, a signalling device and the system to control peripheral devices such as: driving lighting set, monitor, signalling device and sensors, where to the bottom part of the side walls of the housing a longitudinal panel is attached, above the panel parallel to it and symmetrically in the camera observation field, and perpendicular to the camera observation axis there is a wire lead containing the right and left lead channel and the right and left lead bed on the edge of each lead bed at least one sensor is placed, and above the lead at an angle of not less than and not more than 20 degrees to the axis of the lead of a wire there is a set of lighting consisting of at least two pairs of LED headlights located above each lead channel, and at its end, symmetrically with respect to each lead bed and symmetrically with respect to the camera observation axis, while the distance of the camera over the axis of the lead of a wire is selected so that the observation field of the camera covers the full length of the wire lead.

The right and left lead channel are not more than 10 mm high, open at the front of the device and located horizontally between the panel and the base of the LED headlights, and the right and left lead bed have a semi-circle cross section with a diameter of not more than 10mm and are located at the rear end of each lead channel at its upper edge.

The centre of the axis of the lead of a wire is perpendicular to the camera observation axis. The length of the a wire lead, i.e. the distance between the right and left lead channel is not less than 75 mm.

The panel has a white, matt, smooth surface.

The LED headlights are equipped with a brightness control system.

Favourably, at least one sensor is an infrared optical sensor.

The signalling device can be an acoustic signalling device or a diode signalling device .

The monitor is favourably is equipped with a touch panel .

The device is supplied with at least one communication interface whose socket is attached to the outer surface of one of the casing walls.

The elements and the systems of the device are connected with wires, but it is possible to use the wireless communication.

Optionally, the housing is mounted on a platform.

Optionally, to the bottom edges of the side walls of the housing a scaffolding is mounted, on which the LED headlights, the wire lead and sensors are embedded .

Optionally, under the inner surface of the upper wall a shelf is made parallel to the panel, to which bottom surface the camera is mounted..

Favourably, the outer surface of the side wall or the upper wall of the housing is equipped with a handle.

The method for identifying wire markings in which digital images of a wire are taken, images are processed, image characteristics are separated and analysed, is characterized according to the invention by the fact that in the device having the housing, the upper wall of which is equipped with a monitor inclined at an angle of 12 to 18 degrees with respect to the horizontal plane of the device, inside the housing, beyond a camera observation field, connected to the camera, there is a microcomputer with a power supply, a signalling device and the system to control peripheral devices such as: driving lighting set, monitor, signalling device and sensors, where to the bottom part of the side walls of the housing a longitudinal panel is attached, above the panel parallel to it and symmetrically in the camera observation field, and perpendicular to the camera observation axis there is a wire lead containing the right and left lead channel and the right and left lead bed, on the edge of each lead bed at least one sensor is placed, and above the lead at an angle of not less than 10 and not more than 20 degrees to the axis of the lead of a wire there is a set of lighting consisting of at least two pairs of LED headlights located above each lead channel, and at its end, symmetrically with respect to each lead bed and symmetrically with respect to the camera observation axis, while the distance of the camera over the axis of the lead of a wire is selected so that the observation field of the camera covers the full length of the wire lead:
- a wire is placed into the a wire lead so that the wire marking is completely in the a wire lead and points towards the camera, where the middle of the axis of the lead of a wire is located on camera observation axis perpendicular to this axis,
- at least one sensor detects the wire, activates a signal about the presence of a wire and sends a signal via the peripheral devices control system to the microcomputer,
- the microcomputer receives the signal about the presence of a wire and sends a control signal to the camera, which takes the picture of the wire and transmits a return signal containing the image to the microcomputer,
- the microcomputer separates the image characteristics, analyses it and identifies the wire marking; during the first step the fields of the identified marking are determined and in the isolated image of the wire using the first deep convolution neural network, trained to recognize gaps between characters, identification of these gaps takes place in the image of the wire, in the second step in the isolated image of the wire using the second deep convolution neural network, trained to recognize characters, identification of these characters takes place in the image of the wire marking, and in the third step signals generated in previous steps while identifying gaps and characters, are used to identify the wire marking,
- in case of ineffective identification of the wire marking, the microcomputer sends to the camera a control signal, the camera takes another wire picture and transmits a return signal containing the image to the microcomputer, which again separates the image characteristics, analyses it and identifies the wire marking,
- in the case of effective identification of the wire marking, the microcomputer sends to the signalling device via the peripheral devices control system the signal about the identification of the wire marking and the signalling device emits a signal about the end of the identification of the wire marking process.

In the first stage the fields of identified marking are determined and in the isolated image of the wire using the first deep convolution neural network, trained to recognize gaps between characters, identification of these gaps takes place in the wire marking image, in such a way that:
- the microcomputer processes the wire image and isolates the component images of 32 by 32 pixels size along the whole wire image, which are input signals for the neural network, which determines their consistency with the gap between the characters pattern, i.e. the probability that in the isolated position the gap between characters occurs, i.e. the given component image represents the gap between characters,
- the analysis of the component images signals starts with the component image on the left edge of the whole wire image and continues with the step of one pixel to the right of the whole wire image,
- the neural network trained to recognize gaps between characters at points of gap identification returns a probability value close to one at the output layer for a node representing a gap between characters, and in the other places a value close to zero.

In the second step, in the isolated image of the wire, using the second deep convolution neural network trained for character recognition, identification of the characters in the wire marking image takes place, in such a way that:
- a microcomputer processes a wire image and isolates the component images of 32 by 32 pixels size along the whole wire image, which are input signals for the neural network, which determines their consistency with the individual characters pattern, used to create wire markings, i.e. the probability that in the isolated position the specific character occurs, i.e. a given component image represents the specific character,
- the analysis of the component images signals starts with the component image on the left edge of the whole wire image and continues with the step of one pixel to the right for the whole wire image,
- the neural network trained to recognize individual characters for each component image returns a probability value at the output layer for nodes representing particular characters, specifying the occurrence of individual characters in the position of the image; if the component image is recognized as consistent with the pattern of a particular character, a probability value close to one is returned at the output layer for a node representing this particular character; and in the other nodes, representing other characters a value close to zero is returned; however, if the component image does not carry a signal that clearly identifies a specific character, then for more nodes of the output layer, the values proportional to the signal's adequacy are returned with respect to particular characters; the sum of the returned values in all output nodes for each component image is equal to one,
- after completing the process for all input signals, i.e. for all component images, result signals are determined specifying the probability of occurrence of particular characters in each position along the wire, position calculated in pixels; these signals are determined by multiplying the signals designated for particular output nodes of the network to recognize characters with signals, supplemented to one, designated for that position for a node specifying the gap between characters in the network to recognize gaps between characters.

In the third stage, the signals, generated in the previous steps of gaps and characters identification, are used to identify the wire marking, in such a way that::
- the microcomputer uses signals representing a set of markings permissible for a given group of wires, so-called reference signals, stored by the microcomputer in the operating memory,
- the microcomputer uses signals generated in previous stages,
- the microcomputer analyses the consistency of signals sequence from the previous stages with the reference signals, using the maximum likelihood method, i.e. maximum likelihood estimator, where the analysis of consistency enables the correction of the identified marking in case of possibly misidentified particular characters of the marking, i.e. wrong signals for specific positions generated in previous stages.

The wire is placed in a wire lead, whose left and right lead channels have a height of not more than 10 mm, are open at the front of the device and situated horizontally between the panel and the bottom base for attaching the LED headlights, and the left and right lead bed of the wire have a semi-circle cross section with a diameter of not more than 10mm and are located at the rear end of each lead channel on its upper edge.

The wire is placed in a wire lead, whose length, i.e. the distance between the left and right lead channels, is not less than 75 mm.

The pictures are taken on the background of the panel having a white, matt, smooth surface.

The brightness of the LED headlights is adjusted by means of the brightness control system.

With the LED headlights located at the left end of a wire lead, the right half of the observation field of the camera in the plane of the a wire lead is illuminated and with the LED headlights located at the right end of the a wire lead, the left half of the observation field of the camera in the plane of the a wire lead is illuminated.

Favourably, the signal of the presence of a wire is activated by at least one infrared optical sensor.

An sound signalling device or light signalling device, in a form of a diode, is used.

Favourably, a monitor equipped with a touch panel is used.

Control signals are sent by means of the peripheral devices control system, which ensures the brightness adjustment, switching on and off the LED headlights, switching on and off the signalling device, switching on and off the monitor and transfer of signals from the sensors and signals from the monitor touch panel to the microcomputer.

At least one communication interface is used, the socket of which is attached to the outer surface of one of the walls of the housing.

Wired communication is used between the device elements and systems. Wireless communication is also possible, though.

Optionally, a device is used, the casing of which is mounted on a platform

Optionally, a scaffolding is mounted to the bottom edges of the side walls of the housing, on which the LED headlights, a wire lead and sensors are mounted.

Optionally, a device is used in which a shelf is made parallel to the panel under the inner surface of the upper wall, to which bottom surface a camera is mounted.

Preferably, a device is used in which the outer surface of the side wall or upper wall of the housing is equipped with a handle.

The invention uses a solution that eliminates reflections in the field of camera observation in order to ensure optimal illumination of the identified marking of the wire, while ensuring the absence of light reflections along the camera axis. Any light reflections on the surface of the wire in the camera observation field would result in bright spots that are difficult or impossible to distinguish from bright, white components of print. The object is achieved thanks to the appropriate design of the lighting system and the wire sighting gap. The solution includes the lighting set in the form of LED headlights, the wire lead and the panel. The lighting set consists of at least four headlights, at least two over each channel of the wire lead, arranged symmetrically with respect to each lead bed and symmetrically with respect to the camera observation axis. The headlights are directed downwards at as small angle as possible relative to the axis of the camera lead, so that the right pair of headlights illuminates the left half of the gap along the wire lead axis and that the left pair of headlights illuminates the right half of the gap along the wire lead axis. The use of at least two headlights on each side ensures uniform illumination of the wire while eliminating shadows. The panel provides a background in pictures used to identify wire markings. To ensure the highest possible uniformity of the background, the panel has a bright matte, smooth surface, preferably in the form of a white foil. The white colour provides the highest possible universal contrast in relation to the wires. The mat ensures elimination of reflections. The smoothness of the surface ensures elimination of the texture effect and uniformity of the background, increasing the effectiveness of its cut-offs of the view of the wire in the identification process.

High efficiency in identification of wire's markings is achieved by ensuring optimal positioning of the wire mark in the camera observation field. This is ensured by the wire positioning system used in the invention consisting of the wire lead and the monitor. The construction of the lead, including its length and profiling, ensures the possibility of double-sided insertion of the wire of up to 10 mm in diameter. The axis of the wire lead is perpendicular to the camera observation axis and parallel to the panel. The centre of the axis of the wire lead is located on the camera's observation axis. The length of the wire lead is not less than 75 mm. The height of the camera installation over the wire lead axis is adjusted so that the camera observation field covers the full length of the wire lead. After inserting the wire into the wire lead, the monitor provides a preview of the wire arrangement in the lead, in particular the position of the wire marking with respect to the camera. Thanks to this, it is possible to optimally position the marking of the wire so that it is completely in the camera observation field and that all signs of the marking are set towards the camera.

The identification method is based on the use of deep convolutional neural networks. According to the presented invention, the solution comprises two neural networks: one used for the recognition of gaps between characters, the other used for the recognition of characters being the wire markings. The structure of both networks is similar. They differ by the last fully connected output layer.

The structure of the applied deep convolutional neural networks is as follows:
a) input layer characterized by the size of (32 x 32 x 3) - 32 by 32 pixels, 3 colours,
b) first convolutional layer with 32 filters of 3 by 3 input size,
c) first MaxPooling layer sized 2 by 2,
d) second convolutional layer with 32 filters of 3 by 3 input size,
e) second MaxPooling layer sized 2 by 2,
f) dense layer of 128 nodes,
g) output layer - different for each network:
   - in the network allocated for the search of gaps between characters it is characterized by 2 nodes (gap between characters, character),
   - in the network allocated for the recognition of characters it consists of the number of nodes equal to the number of characters used for wire markings (configurable parameter).

All activating functions in both networks are of rectified linear unit ReLU type.

The neural network is used for the identification of wire's markings, however it must first be trained in the analysis of images of wires and in the recognition of characters.

The process of training of the neural networks takes place outside the device, in the computer featured by high processing power, aided by human participation. This process comprises three fundamental phases:
1) Human description of a markings on the training images,
2) Training neural network recognizing spaces between characters,
3) Training neural network recognizing particular characters.

The training process of both networks utilizes the algorithm of stochastic function optimization called Adam.

The neural network training process begins by the acquisition of a representative number of images depicting real wire markings, whose recognition is to be automated. To ensure sufficient level of trained neural network, it is essential that the images depicting the real wire markings contain all characters. It is also important that the images depict particular characters more than once, in multiple ways, covering possible distortions, blurring or other defects which may appear in real markings. Wires presented on the pictures are pre-processed with the application of adaptive threshold method and beam-search into a linear image. The colour RGB image processing is applied. Adaptive thresholds are established for particular component colours and next, a component is selected, for which the beam-search denominates the longest local continuity, counted in pixels. Next, particular characters located on the image are indicated. Each character is featured by the following:
- position counted in pixels from the left edge of an image till the beginning of the character field concerning a given character (the character field is of 32 by 32 pixel size),
- character code.

The isolated characters have been shown below on the image of wire marking:

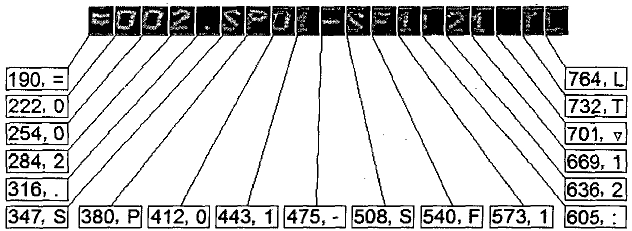

This process is carried out with human participation. Information about positions and codes of depicted character is entered for a given image. In the example illustrated above, the image is associated with the following string of description pairs: (190, =), (222, 0), (254, 0), (284, 2), (316, .), (347, S), (380, P), (412, 0), (443, 1), (475, -), (508, S), (540, F), (573, 1), (605, :), (636, 2), (669, 1), (701, gap), (732, T), (764, L). The prepared in the aforementioned way input data enable gradual training of the neural network in the aspects of particular character recognition as well as in the recognition of gaps between characters - ie. identification of fragments of the photographed wire with no characters.

The training of the neural network for the recognition of particular characters takes place by giving all indicated on images specimens of a given character.

The specimens of '0' character, based on the wire marking image, have been shown below:

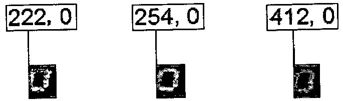

Thanks to the large quantity of images and the mappings of a specific character appearing on them illustrating imperfections of the print, the neural network is trained to a level that ensures effective recognition of real wire's markings despite actual defects and character distortions.

Training the neural network to recognize the spacing between characters utilizes information about the position of each subsequent two characters. The image of the spacing between characters is entered as the content of 32 by 32 pixel matrix, whose first, ie. leftmost column is halfway between the indicated fields of the subsequent two characters. An exception is the case of two consecutive gap characters. In such case, it is assumed that the spacing between them does not occur and the matrix determined in the middle between the indicated gap characters is not considered as the pattern of the gap between characters. Below is the determination of the mappings of the three initial gaps between the characters based on the example of the wire for which the characters have been defined in the illustration above. The fields of these gaps begin in positions 206, 238 and 269, calculated in pixels from the left edge of the image.

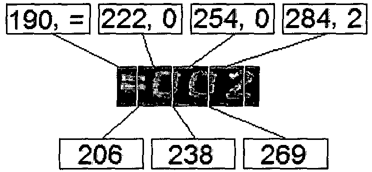

The optimization of parameters in particular layers of convolutional neural network used for spacing recognition takes place by reading the images of particular gaps and applying Adam algorithm. According to the above illustration the specimen of spacing between characters is featured by high changeability, mainly due to the variability of the characters appearing on the left and right sides of the gap character. The additional factor of specimen variability is the quality and deformation of print. In the training process, the network parameters are optimized, ensuring the generalization of the eventual spacing pattern between characters, in such a way that it represents common features and flexibly modelled variants of differences of particular real images of gaps between characters.

After completing the process of neural network training, the result is converted into executable code on the device's microcomputer. This code implements the automatic identification process of wire's markings described in the method according to the invention.

The invention has been presented in a drawing in which fig. 1 shows the device for identifying wire's markings seen from the front view, without a front wall; fig. 2 shows the device for identifying wire's markings seen from the side; fig. 3a and 3b show the method of operating the device for identifying wire markings, according to the invention, in a block-diagram; fig. 4a, 4b and 4c illustrate the steps of identifying a wire marking using a deep convolutional neural network; fig. 5 shows another variant of the device for identifying wire's markings in a front view, without a front wall; fig. 6 shows a fragment of a device comprising a desktop, a lead and a camera.

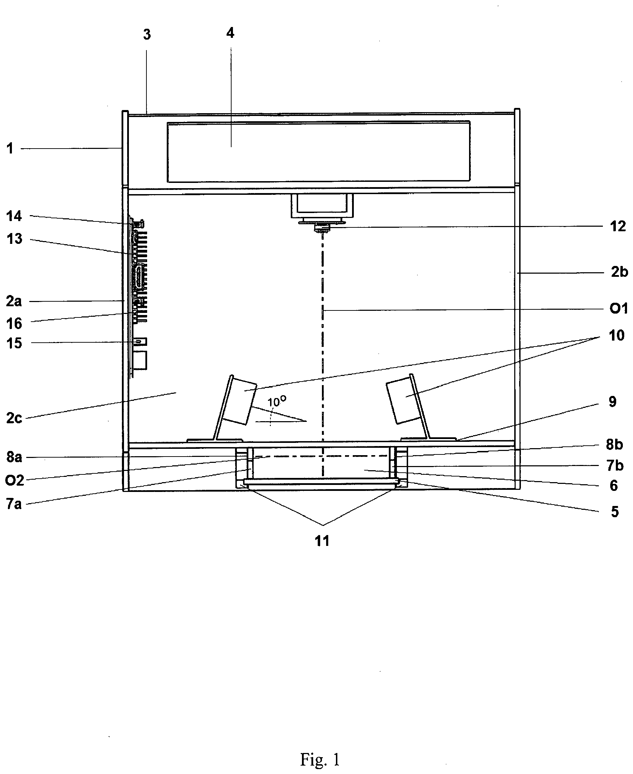

The device for identifying wire markings shown in fig. 1 has a housing 1 consisting of two side walls: 2a, 2b, a side rear wall 2c, not shown in the figure a side front wall 2d and the upper wall 3. The upper wall 3 is equipped with a 4-watt LCD monitor with a touch panel, inclined at an angle of 12 degrees to the horizontal plane of the device. A longitudinal panel 5 is attached to the bottom part of the walls 2a, 2b, 2c, 2d of the housing 1. The panel 5 has a white, matt, smooth surface in the form of a foil. Above the panel 5 there is a lead of a wire 6 comprising the right and left lead channel 7a, 7b and the right and left lead bed 8a, 8b. Above the lead 6, fixed by the base 9, at an angle of 10 degrees to the axis of the wire lead 02, there is a lighting set consisting of two pairs of LED headlights 10, equipped with a brightness adjustment system and located above each lead channel 7a, 7b, at its end, symmetrically with respect to each lead bed 8a, 8b and symmetrically with respect to the camera observation axis O1. There is one infrared optical sensor 11 fixed at the edge of each lead bed 8a, 8b. The left and right lead channels 7a, 7b are 10 mm height, opened from the front of the device and placed horizontally between the panel 5 and the mounting base 9 of the LED headlights 10, and the left and right lead bed 8a, 8b have a semi-circle cross-section of 10mm in diameter and are located at the rear end of each lead channel 7a, 7b at its upper edge. The length of the wire lead 6, i.e. the distance between the left and right lead channels 7a, 7b is 75 mm. An HD camera 12 is attached to the inner surface of the upper wall 3, the height of which above the axis of the wire lead 6 is selected such that the observation field of the camera 12 covers the full length of the wire lead 6. There is a microcomputer 13 is fixed to the inner surface of the side wall 2a of the housing 1, connected to the camera 12, outside of the camera's observation field. The microcomputer 13 is equipped with its power supply 14, a sounder 15 and the control system of the peripheral devices 16, i.e. lightening set, a monitor 4, a signalling device 15 and optical infrared sensors 11. The wire lead 6 is placed above the panel 5, parallel to it and symmetrically in the observation field of the camera 12, and the centre of the wire lead axis O2 is perpendicular to the camera observation axis O1.

The peripherals' control system 16 provides brightness adjustment and turn on and off functionality of: the LED headlights 10, signalling device 15, monitor 4, and the transmission of signals from the infrared optical sensors 11 to the microcomputer 13.

The power supply system 14 provides a stabilized 5V voltage with an accuracy of 0.1V.

The device is equipped with two communication interfaces, not shown in the drawing, attached to the external surface of the rear side wall 2c of housing 1.

Elements and systems of the device are connected by wires. The outer surface of the rear side wall 2c of the housing 1 is provided with a handle, not shown in the drawing .

The HD camera 12 performs two functions:
- preview of the placement in the lead 6 the wire being identified; the preview is displayed on monitor 4 allowing the user to set the wire marking towards the camera 12,
- taking pictures to identify wire's markings.

The use of a high resolution camera guarantees obtaining images that enable the identification of markings regardless of the diameter of the wires and the size of the characters - from 1 mm.

Equipped with operational memory, the microcomputer 13 implements an algorithm that controls the way of identifying wire's markings and ensures communication of the device with external units and systems, in particular transmission of the identified wire mark to the production environment.

The LED headlights 10 provide the right illumination of the identified wire. The LED headlights 10 are set to illuminate the identified wire along its surface, almost perpendicular to the camera axis 12. This arrangement of the headlights 10 prevents reflections in the image of the camera 12. The use of LED headlights 10, located on both sides of the wire lead 6 ensures elimination of shadows of the wire being identified.

Monitor - LCD display 4 with touch panel - provides a preview of the arrangement of the wire, allowing it to be properly aligned with the camera 12, guaranteeing optimal exposure of the wire mark. Additional functions of the monitor 4 are: displaying the identified wire mark and providing an interface with the user through the touch panel.

The sounder 15 provides audible notification to the user that the identification of the wire marking has been completed.

The infrared optical sensors 11 identify the appearance of the wire in the lead 6 and send to the microcomputer 13 a signal activating the start of the wire identification process.

The peripheral control system 16 has a known structure and performs the following functions:
- controlling of LED headlights 10, i.e. switching on, regulation of brightness, switching off,
- controlling of the monitor 4, i.e. switching on, off,
- controlling the sounder 15, i.e. switching on, switching off,
- measuring the level of signals from the optical infrared sensors 11 detecting the presence of the identified wire and transferring the appropriate information to the microcomputer 13.

The power supply system 14 has a known design and provides adequate power supply to all components and systems of the device.

The wire lead 6 ensures optimal arrangement of the identified wire in the observation field of the camera 12 and its appropriate lighting with LED diodes . The construction of the wire lead 6 simultaneously secures the observation gap of the camera 12 from the influence of external lighting guaranteeing homogeneous repeatable conditions of identification independent of the surroundings.

Panel 5 creates the background of the wire being identified. It has a white, smooth, matt surface in the form of a white foil ensuring maximum elimination of reflections.

Ethernet and USB communication interfaces enable data transmission to and from the device, in particular by providing the ability to send identified wire's markings to external systems and devices, and to update the software on the device.

The microcomputer 13 uses a control algorithm to perform a method of identifying wire's markings. Placing the wire in the lead 6 activates the infrared optical sensors 11 and sends to the microcomputer 13 a signal activating the process of identifying the wire mark. In this process, pictures of the wire placed in the lead 6 are taken cyclically with the HD camera 12 and are extracted and analysed by the microcomputer 13. The identification of the mark completes the process. The microcomputer 13 sends a signal to the sounder 15 and provides information about the identified wire mark to the other cooperating devices in the production environment.

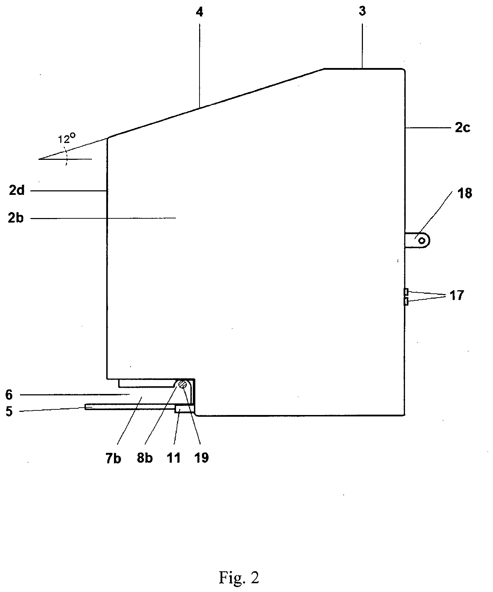

Fig. 2 is a side view of the device described in the first embodiment and shown in fig. 1.

The device described in the first embodiment has a housing 1 consisting of a side wall 2 a not shown in the drawing , a side wall 2b, a side wall 2c, a side wall 2d and a top wall 3 equipped with a monitor 4 . Monitor 4 is inclined at an angle of 12 degrees to the horizontal plane of the device. The device is equipped with two communication interface slots 17 attached to the outer side surface of the rear wall 2c of the housing 1. The outer surface of the lateral back wall 2c of the housing 1 is provided with a handle 18. In the lead 6 of the wire located above the panel 5 the wire 19 has been placed.

At the edge of the lead bed 8b, located at the rear end of the lead channel 7b, there is one infrared optical sensor 11.

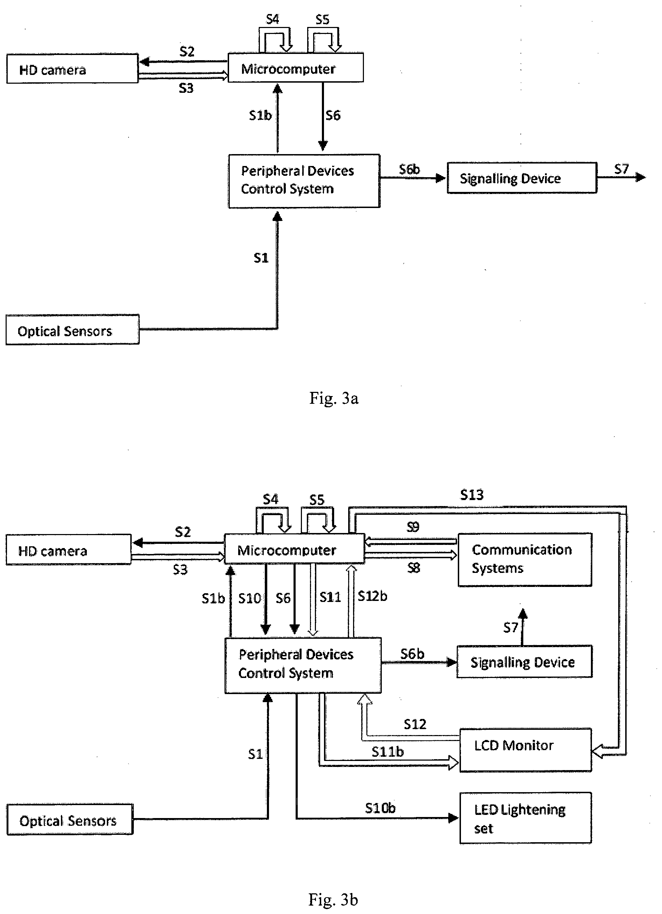

Fig. 3a and 3b show the method of operating the device described in the first and second example of implementation and the method according to the invention in a block-diagram.

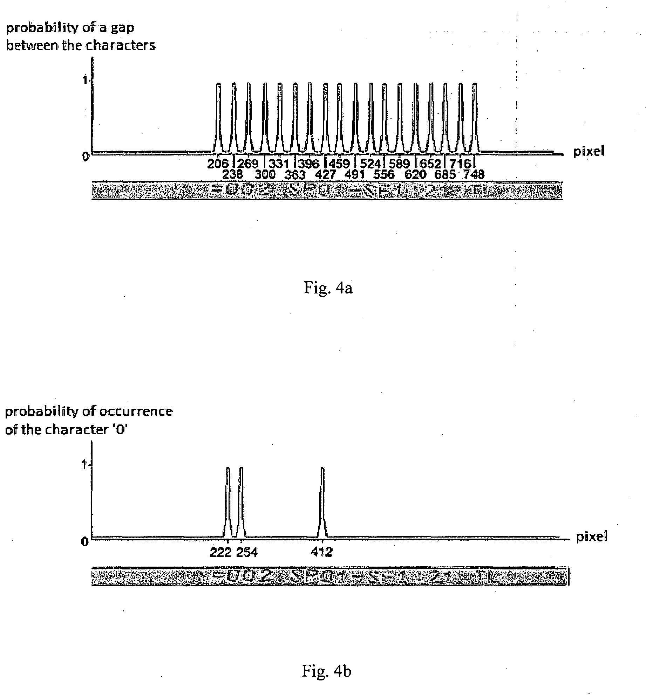

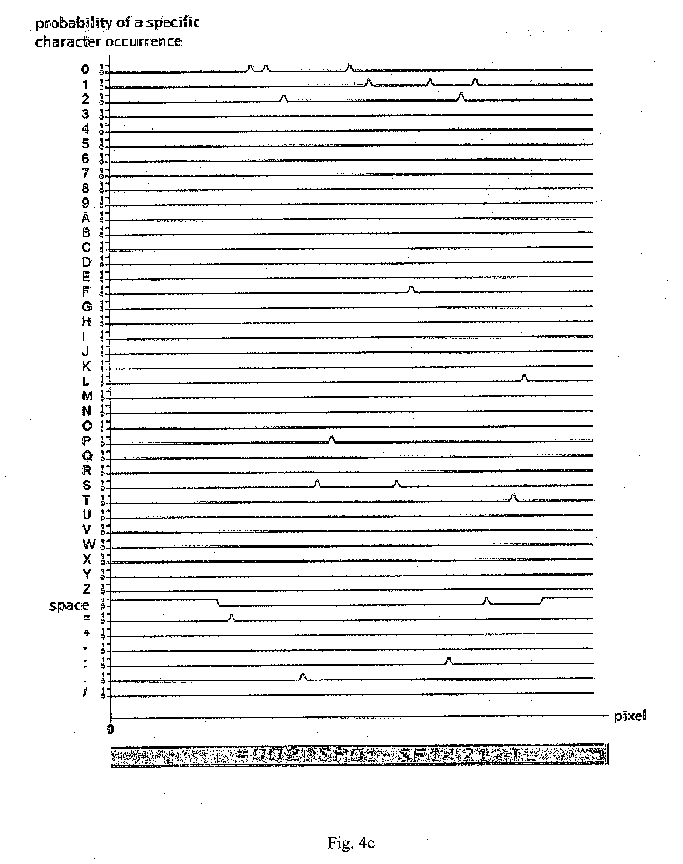

In the wire lead 6 of the device, there is a wire 19 containing the marking =002.SP01-SF1: 21 TL, placed in such a way that the full mark is in the lead 6 and is directed towards the camera 12, and the centre of the axis O2 of the wire lead 6 is located on O1 of observation axis of the camera 12, perpendicularly to this axis. The LED headlights 10 located at the left end of the wire lead 6 illuminate the right half of the camera observation field in the plane of the wire lead 6, and the LED headlights 10 located at the right end of the wire lead 6 illuminate the left half of the camera observation field in the plane of the wire lead 6. According to FIG. 3a, the wire 19 was detected by infrared optical sensors 11, which activated the signal S1 alarming about the presence of the wire 19 and sent it via the peripheral devices control system 16 in the form of a signal S1b to the microcomputer 13. The microcomputer 13 received the signal S1b about the presence of the wire 19 and sent the control signal S2 to the camera 12, which took the picture of the wire 19 and transmitted the return signal S3 containing the picture to the microcomputer 13. The microcomputer 13 separated the image features by known methods, analysed it and identified the mark of the wire 19, wherein the fields of the marking being identified were designated in the first stage, and, in the isolated image of the wire 19 with the usage of the first deep convolutional neural network, trained for the recognition of gaps between characters, the breaks in the image of the wire 19 were identified; in the second stage, in the isolated image of the wire 19, using the second deep convolutional neural network, trained for character recognition, the characters in the image of the wire marking were identified; and in the third stage the signals generated in the previous steps S4 and S5 were used to identify gaps and characters to finally identify the wire marking. Stages of the deep convolutional neural network process are shown in Figures 4a, 4b and 4c.

The identification of the wire 19 was ineffective and the microcomputer 13 sent a control signal S2 to the camera 12, after which the camera 12 took another picture of the wire 19 and transmitted a return signal S3 containing the image to the microcomputer 13, which again separated the image features, analysed it and successfully identified the mark wire 19.

The microcomputer 13 sent the signal S6 to the sound signalling device 15 via the peripheral devices control system 16 in the form of the signal S6b with the identification of the marking, and the sound signalling device 15 emitted the signal S7 having completed the identification process of the wire 19 marking.

There is a flow of electrical signals between the active elements of the device according to the block diagram shown in Fig. 3b.

The S2 is used by microcomputer 13 to control HD camera 12. The S3 signal is a video data signal from the HD camera 12 to the microcomputer 13.

Signals S8 and S9 include communication channels enabling transmission of information about the identification of wires to devices and external systems in the production environment and updating on the device the software for wires identification.

The signals S1b, S6, S10, S11, S12b include information flow and control signals between the microcomputer 13 and the peripheral devices control system 16. The peripheral devices control system 16 mediates microcomputer 13 communication with the LED headlights (signal S10 is a control signal sent from the microcomputer 13 and signal S10b is a signal issued by the peripheral device control 16 in response to signal S10), monitor 4 (signal S11 is a signal indicating control of monitor 4 sent from the microcomputer 1), and signal S11b is a signal sent by the peripheral devices control system 16 in response for signal S11, signal S12 is a signal sent from the monitor's touch panel 4,and the S12b signal is a signal transmitted by the peripheral devices control system 16 to the microcomputer 13 in response to the S12 signal), the signaling device 15 (the S6 signal is a control signal sent from the microcomputer 13, and the S6b signal is a signal issued by the peripheral devices control system 16 in response to the S6 signal) and the infrared optical sensors 11 (signal S1 is a signal issued by the infrared optical sensors 11, and the signal S1b is a signal issued by the peripheral devices control system 16 to the microcomputer 13 in response to signal S1).

The S10b signal is a control signal of LED headlights 10 by the peripheral devices control system 16. This signal is an executive signal - regulation of brightness of the lighting, switching on and off the headlights. This signal is the reaction of the peripheral devices control system 16 to the control signal S10 from the microcomputer 13.

The S13 signal is a video signal from the microcomputer 13 to the monitor 4.

Fig. 4a, 4b and 4c illustrate the steps of identifying a conduit by means of a deep convolutional neural network.

The process of analysing the picture of the wire 19 placed in the wire lead 6 began by recognizing the position of the wire 19 in the image using the adaptive threshold method to detect the potential position of the wire edge and the radial local search method to identify the actual position of the wire 19 edge based on the assumption of edge continuity. The method works on RGB colour pictures. Adaptive thresholds were determined for individual component colours, and then the component was selected for which the radial search determined the longest local edge continuity, calculated in pixels. After determining the location of the wire, fragments of the picture between the edges of the wire 19 were isolated from the picture and converted into a line image, creating a description of the straight wire 19.

Then, in the isolated image of the wire 19 by means of the first deep convolutional neural network trained to recognize the gaps between the characters, in the first step, the gaps in the image of the wire 19 were identified, such that:
- the microcomputer 13 has processed the picture of the wire 19 and isolated the constituent images 32 by 32 pixels along the entire image of the wire 19, which are input signals of the neural network, which determined their consistency with the pattern of gaps between characters, i.e. the probability that there is a gap between characters in a given position. , i.e. a given constituent image represents a break between characters,
- analysis of the signals representing the images component began with a video component on the left edge of the whole image of the wire 19 and continued in increments of one pixel to the right of the entire image of the wire 19, the probability of a gap between the characters in the image component starting in a specific pixel, counting along the wire, is shown in Fig. 4a,
- a neural network, trained to recognize gaps between characters, returned at the gap identification points a value near one on the exit layer for the node representing the gap between the characters, and in the remaining places - the value close to zero.

In the second stage, using the second deep convolutional network, the identification of characters in the image of the wire 19 was carried out in such a way that:
- the microcomputer 13 processed the image of the wire 19 and isolated the constituent images 32 by 32 pixels along the entire image of the wire 19, which were the input signals of the neural network, which determined their compliance with the patterns of the individual characters used to create the wire designations, i.e. the probability that there is a specific character in a given position, i.e. a given constituent image represents a specific character,
- the analysis of the signals constituting the constituent images started from the constituent image on the left edge of the entire image of the wire 19 and was continued with the step of one pixel to the right for the whole picture of the wire 19 ,
- the neural network, trained to recognize individual characters for each constituent image, returned, on the output layer for nodes representing particular characters, the probability value (determining the occurrence of this image in the position of this character) and if it recognized the constituent image as consistent with the pattern of the specified character in the output node representing this character, a value close to one is returned; and in nodes representing the other characters - a value close to zero; however, if the constituent image did not carry a signal that would uniquely identify a specific character, then for a larger number of the output layer nodes, the values proportional to the signal adequacy would be returned with respect to particular characters, the sum of the returned values in all output nodes for each constituent image is equal to 1; the determined probability of occurrence of the character '0' in the constituent image beginning in a given pixel, counting along the wire 19, is shown in fig. 4b,

- after executing the action process for all input signals, i.e. all constituent images, result signals are determined specifying the probability of occurrence of particular characters in each position (calculated in pixels) along the wire 19; these signals were determined by multiplying the signals designated for particular output nodes of the network to recognize characters, with, supplemented to one, signal designated for that position for a node specifying the gap between characters in the network to recognize gaps between characters; fig. 4c shows a histogram illustrating the resultant probability of a specific character occurrence in each position along the wire, on the example of the wire 19 considered above, assuming that wire markings can contain numbers, uppercase letters, a gap, and selected punctuation marks.

In the third stage, signals generated in previous stages were used to identify gaps and characters to identify the markings on the wire 19 in such a way that:
- the microcomputer 13 used signals representing a set of markings permissible for a given group of wires, so-called reference signals, stored by the microcomputer 13 in the operational memory,
- the microcomputer 13 used signals generated in previous stages,
- the microcomputer 13 analysed the consistency of signal sequence from the previous stages with the reference signals, using the maximum likelihood method, i.e. the maximum likelihood estimator, in which the analysis of consistency enabled the correction of the identified marking in case of possibly misidentified individual characters of the markings, i.e. wrong signals for specific positions generated in previous stages.

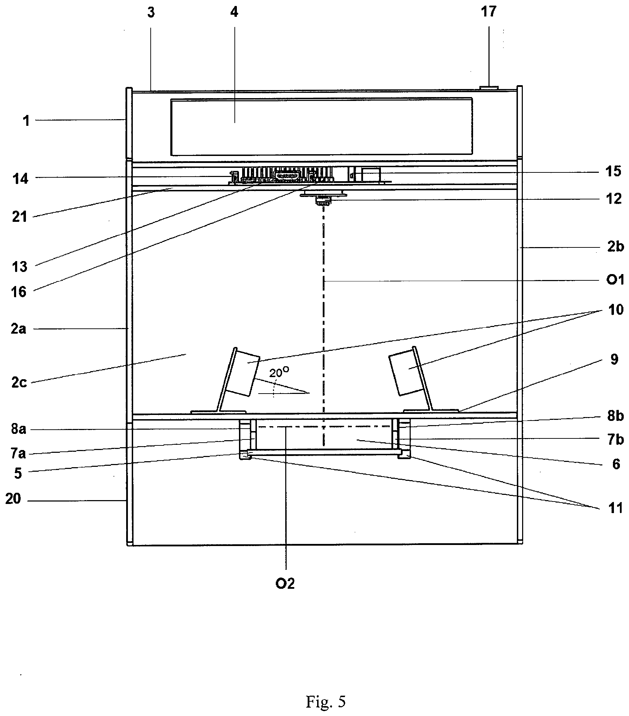

Fig. 5 illustrates an optional embodiment of the device described in the first example.

In this device, the housing 1 is mounted on a fixed platform 20, which facilitates the positioning of the wire in the lead 6. Under the inner surface of the upper wall 3, parallel to the panel 5, there is a shelf 21, to the bottom surface of which a camera 12 is mounted, and on the upper surface of the shelf 21 there is a microcomputer 13 connected to the camera 12 and equipped with the power supply 14, lightening signalling device 15 and the peripheral devices control system 16, LED headlights 10, monitor 4 and optical infrared sensors 11.

In this device, the monitor 4 is inclined at an angle of 18 degrees with respect to the horizontal plane of the device. The device is equipped with three pairs of LED headlights 10 located at an angle of 20 degrees and in relation to the axis O2 of the wire lead.

The left and right channels of the wire 7a, 7b are 5 mm high, and the left and right wire lead beds 8a, 8b have a semi-circle cross-section, 5mm in diameter. The length of the wire lead 6, i.e. the distance between the left and right lead channels 7a, 7b is 90 mm.

A socket 17 of the communication interface is located on the upper wall 3.

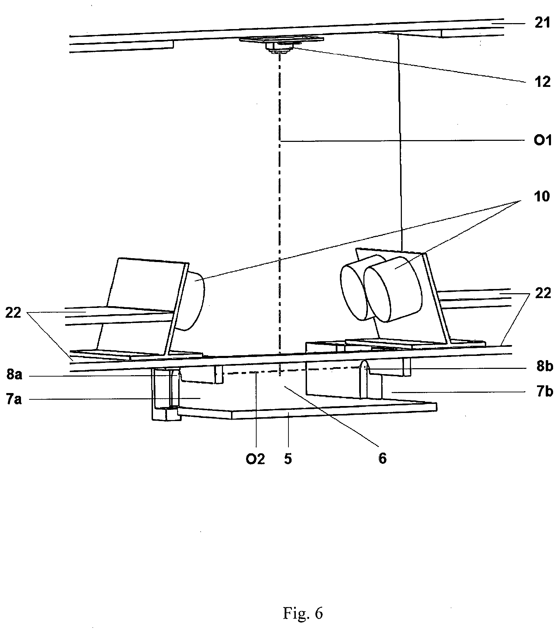

Fig. 6 shows a device portion including a panel, a wire lead and a camera.

An HD camera 12 is attached to the shelf 21, the height of which above the axis of the lead wire O2 is selected such that the observation field of the camera 12 covers the full length of the wire lead 6. A scaffolding 22 is mounted to the lower part of the side walls of the casing 1, on the scaffolding, a set of illumination in the form of two pairs of LED headlights 10 and a lead 6 and two infrared optical sensors 11 are installed. The wire lead 6 has right and left lead channels 7a, 7b and right and left lead beds 8a, 8b. Each pair of LED headlights 10 is fixed to the scaffolding 22 above each lead channel 7a, 7b, and at its end, symmetrically with respect to each lead bed 8a, 8b and symmetrically with respect to the observation axis of the camera O1 . At the edge of each lead bed 8a, 8b there is one infrared optical sensor 11. There is a longitudinal panel 5 fixed to the lower part of the side walls, under the lead 6. The wire lead 6 is placed above the panel 5, parallel to it and symmetrically in the observation field of the camera 12, and the centre of the wire lead axis O2 is perpendicular to the camera observation axis O1.

## Claims

1. The method for identifying wire markings in which digital images of a wire are taken, images are processed, image characteristics are separated and analysed, is **characterized in that** in the device having the housing (1), the upper wall (3) of which is equipped with a monitor (4) inclined at an angle of 12 to 18 degrees with respect to the horizontal plane of the device, inside the housing (1), beyond a camera (12) observation field, connected to the camera (12), there is a microcomputer (13) with a power supply (14), a signalling device (15) and the system (16) to control peripheral devices such as: driving lighting set, monitor (4), signalling device (15) and sensors (11), where to the bottom part of the side walls (2a, 2b, 2c, 2d) of the housing (1) a longitudinal panel (5) is attached, above the panel (5) parallel to it and symmetrically in the camera (12) observation field, and perpendicular to the camera observation axis (O1) there is a wire lead (6) containing the right and left lead channel (7a, 7b) and the right and left lead bed (8a, 8b), on the edge of each lead bed ( 8a, 8b) at least one sensor (11) is placed, and above the lead (6) at an angle of not less than 10 and not more than 20 degrees to the axis of the lead (O2) of a wire there is a set of lighting consisting of at least two pairs of LED headlights (10) located above each lead channel (7a, 7b), and at its end, symmetrically with respect to each lead bed (8a, b) and symmetrically with respect to the camera observation axis (O1), while the distance of the camera (12) over the axis of the lead (O2) of a wire is selected so that the observation field of the camera (12) covers the full length of the wire lead (6):
- a wire (19) is placed into the a wire lead (6) so that the wire marking (19) is completely in the a wire lead (6) and points towards the camera (12), where the middle of the axis of the lead of a wire (O2) is located on camera observation axis (O1) perpendicular to this axis (O1),
- at least one sensor (11) detects the wire (19), activates a signal about the presence of a wire (S1) and sends a signal (S1b) via the peripheral devices control system (16) to the microcomputer (13),
- the microcomputer (13) receives the signal (S1b) about the presence of a wire and sends a control signal (S2) to the camera (12), which takes the picture of the wire (19) and transmits a return signal (S3) containing the image to the microcomputer (13),
- the microcomputer (13) separates the image characteristics, analyses it and identifies the wire (19) marking; during the first step the fields of the identified marking are determined and in the isolated image of the wire (19) using the first deep convolution neural network, trained to recognize gaps between characters, identification of these gaps takes place in the image of the wire (19), in the second step in the isolated image of the wire (19) using the second deep convolution neural network, trained to recognize characters, identification of these characters takes place in the image of the wire (19) marking, and in the third step signals (S4, S5) generated in previous steps while identifying gaps and characters, are used to identify the wire (19) marking,
- in case of ineffective identification of the wire (19) marking, the microcomputer (13) sends to the camera (12) a control signal (S2), the camera (12) takes another wire (19) picture and transmits a return signal (S3) containing the image to the microcomputer (13), which again separates the image characteristics, analyses it and identifies the wire (19) marking,
- in the case of effective identification of the wire (19) marking, the microcomputer (13) sends to the signalling device (15) via the peripheral devices control system (16) the signal (S6) about the identification of the wire marking and the signalling device (15) emits a signal (S7) about the end of the identification of the wire (19) marking process.

2. The method for identifying wire markings according to claim 1, **characterized in that** in the first stage the fields of identified marking are determined and in the isolated image of the wire (19) using the first deep convolution neural network, trained to recognize gaps between characters, identification of these gaps takes place in the wire marking image, in such a way that:
- the microcomputer (13) processes the wire (19) image and isolates the component images of 32 by 32 pixels size along the whole wire (19) image, which are input signals for the neural network, which determines their consistency with the gap between the characters pattern, i.e. the probability that in the isolated position the gap between characters occurs, i.e. the given component image represents the gap between characters,
- the analysis of the component images signals starts with the component image on the left edge of the whole wire (19) image and continues with the step of one pixel to the right of the whole wire (19) image,
- the neural network trained to recognize gaps between characters at points of gap identification returns a probability value close to one at the output layer for a node representing a gap between characters, and in the other places a value close to zero.

3. The method for identifying wire markings according to claim 2, **characterized in that** in the second stage, in the isolated image of the wire (19), using the second deep convolution neural network trained for character recognition, identification of the characters in the wire (19) marking image takes place, in such a way that:
- the microcomputer (13) processes the wire (19) image and isolates the component images of 32 by 32 pixels size along the whole wire (19) image, which are input signals for the neural network, which determines their consistency with the individual characters pattern, used to create wire markings, i.e. the probability that in the isolated position the specific character occurs, i.e. a given component image represents the specific character,
- the analysis of the component images signals starts with the component image on the left edge of the whole wire (19) image and continues with the step of one pixel to the right for the whole wire (19) image,
- the neural network trained to recognize individual characters for each component image returns a probability value at the output layer for nodes representing particular characters, specifying the occurrence of individual characters in the position of the image; if the component image is recognized as consistent with the pattern of a particular character, a probability value close to one is returned at the output layer for a node representing this particular character; and in the other nodes, representing other characters a value close to zero is returned; however, if the component image does not carry a signal that clearly identifies a specific character, then for more nodes of the output layer, the values proportional to the signal's adequacy are returned with respect to particular characters; the sum of the returned values in all output nodes for each component image is equal to one,
- after completing the process for all input signals, i.e. for all component images, result signals are determined specifying the probability of occurrence of particular characters in each position along the wire (19), position calculated in pixels; these signals are determined by multiplying the signals designated for particular output nodes of the network to recognize characters with signals, supplemented to one, designated for that position for a node specifying the gap between characters in the network to recognize gaps between characters.

4. The method for identifying wire markings according to claim 3, **characterized in that** in the third stage, the signals, generated in the previous steps of gaps and characters identification, are used to identify the wire (19) marking, in such a way that:
- the microcomputer (13) uses signals representing a set of markings permissible for a given group of wires, so-called reference signals, stored by the microcomputer (13) in the operating memory,
- the microcomputer (13) uses signals generated in previous stages,
- the microcomputer (13) analyses the consistency of signals sequence from the previous stages with the reference signals, using the maximum likelihood method, i.e. maximum likelihood estimator, where the analysis of consistency enables the correction of the identified marking in case of possibly misidentified particular characters of the marking, i.e. wrong signals for specific positions generated in previous stages.

5. The method for identifying wire markings according to any of claims from 1 to 4, **characterized in that** the brightness of the LED headlights (10) is adjusted by means of the brightness control system.

6. The method for identifying wire markings according to any of claims from 1 to 5, **characterized in that** with the LED headlights (10) located at the left end of the a wire lead (6), the right half of the observation field of the camera (12) in the plane of the a wire lead (6) is illuminated and with the LED headlights (10) located at the right end of the a wire lead (6), the left half of the observation field of the camera (12) in the plane of the a wire lead (6) is illuminated.

7. The method for identifying wire markings according to any of claims from 11 to 6, **characterized in that** a sound signalling device (15) is used.

8. The method for identifying wire markings according to any of claims from 1 to 7, **characterized in that** the light signalling device (15) in a form of a diode.

9. The method for identifying wire markings according to any of claims from 1 to 8, **characterized in that** a monitor (4) equipped with a touch panel is used.

10. The method for identifying wire markings according to any of claims from 1 to 9, **characterized in that** the control signals (S6, S10, S11) are sent by means of the peripheral devices control system (16), which ensures the brightness adjustment, switching on and off the LED headlights (10), switching on and off the signalling device (15), switching on and off the monitor (4) and transfer of signals (S1) from the sensors (11) and signals (S12) from the monitor touch panel (4) to the microcomputer (13).

11. The method for identifying wire markings according to any of claims from 1 to 10, **characterized in that** at least one communication interface is used, the socket (17) of which is attached to the outer surface of one of the walls (2a, 2b, 2c, 2d) of the housing (1).

12. The method for identifying wire markings according to any of claims from 1 to 11, **characterized in that** wired communication is used between the device elements and systems.

13. The method for identifying wire markings according to any of claims from 1 to 11, **characterized in that** a device is used, the casing (1) of which is mounted on a platform (20).

14. The method for identifying wire markings according to any of claims from 1 to 11, **characterized in that** a device is used, in which a scaffolding (22) is mounted to the bottom edges of the side walls (2a, 2b, 2c, 2d) of the housing (1), on which the LED headlights (10), a wire lead (6) and sensors (11) are mounted.

15. The method for identifying wire markings according to any of claims from 1 to 11, **characterized in that** a device is used in which a shelf (21) is made parallel to the panel (5) under the inner surface of the upper wall (3), to which bottom surface a camera (12) is mounted.

## Patentansprüche

1. Das Verfahren zur Identifizierung von Leitermarkierungen, bei dem digitale Bilder eines Leiters aufgenommen, Bilder verarbeitet, Bildmerkmale separiert und analysiert werden, ist **dadurch gekennzeichnet, dass** bei dem Gerät mit dem Gehäuse (1), der oberen Wand (3) von das mit einem Monitor (4) ausgestattet ist, der in einem Winkel von 12 bis 18 Grad gegenüber der horizontalen Ebene des Geräts geneigt ist, innerhalb des Gehäuses (1), außerhalb eines Beobachtungsfelds der Kamera (12), verbunden mit der Kamera (12), besteht aus einem Mikrocomputer (13) mit einer Stromversorgung (14), einem Signalgerät (15) und dem System (16) zur Steuerung von Peripheriegeräten wie: Fahrlichtanlage, Monitor (4), Signalgerät (15). und Sensoren (11), wobei am unteren Teil der Seitenwände (2a, 2b, 2c, 2d) des Gehäuses (1) eine Längsplatte (5) angebracht ist, über der Platte (5) parallel dazu und symmetrisch Im Beobachtungsfeld der Kamera (12) und senkrecht zur Kamerabeobachtungsachse (O1) befindet sich eine Drahtleitung (6), die den rechten und linken Leitungskanal (7a, 7b) und das rechte und linke Leitungsbett (8a, 8b) enthält, am Rand jedes Bleibetts ( 8a, 8b) ist mindestens ein Sensor (11) angebracht, und zwar über dem Blei (6) in einem Winkel von nicht weniger als 10 und nicht mehr als 20 Grad zur Achse des An der Leitung (02) eines Kabels befindet sich über jedem Leitungskanal (7a, 7b) ein Beleuchtungssatz bestehend aus mindestens zwei Paaren LED-Scheinwerfern (10) und an dessen Ende symmetrisch zu jedem Leitungsbett (8a, 8b) und symmetrisch zur Kamerabeobachtungsachse (O1), wobei der Abstand der Kamera (12) über der Achse der Zuleitung (02) eines Drahtes so gewählt ist, dass das Beobachtungsfeld der Kamera (12) deckt die gesamte Länge der Drahtleitung (6) ab:
- Ein Draht (19) wird so in die Drahtleitung (6) eingelegt, dass die Drahtmarkierung (19) vollständig in der Drahtleitung (6) liegt und in Richtung der Kamera (12) zeigt, wo sich die Achsenmitte befindet die Draht eines Drahtes (02) liegt auf der Kamerabeobachtungsachse (O1) senkrecht zu dieser Achse (O1),
- mindestens ein Sensor (11) erkennt den Draht (19), aktiviert ein Signal über das Vorhandensein eines Drahtes (S1) und sendet ein Signal (S1b) über die Peripheriegerätesteuerung (16) an den Mikrocomputer (13),
- der Mikrocomputer (13) empfängt das Signal (S1b) über das Vorhandensein eines Drahtes und sendet ein Steuersignal (S2) an die Kamera (12), die das Bild des Drahtes (19) aufnimmt und ein Rücksignal (S3) sendet) mit dem Bild an den Mikrocomputer (13),
- der Mikrocomputer (13) trennt die Bildmerkmale, analysiert sie und identifiziert die Markierung des Drahtes (19); Im ersten Schritt werden die Felder der identifizierten Markierung bestimmt und im isolierten Bild des Drahtes (19) erfolgt die Identifizierung dieser Lücken im Bild des Drahtes unter Verwendung des ersten neuronalen Netzwerks mit tiefer Faltung, das darauf trainiert ist, Lücken zwischen Zeichen zu erkennen (19) im zweiten Schritt wird das zweite tiefe Faltungs-Neuronale Netzwerk verwendet, um das Bild des Drahtes (19) zu isolieren und darauf zu trainieren, Zeichen zu erkennen. Diese Zeichen werden im Bild des Drahtes (19) identifiziert und markiert die in den vorherigen Schritten beim Identifizieren von Lücken und Zeichen erzeugten dritten Schrittsignale (S4, S5) werden zum Identifizieren der Markierung des Drahtes (19) verwendet,
- im Falle einer unwirksamen Identifizierung der Markierung des Drahtes (19), sendet der Mikrocomputer (13) ein Steuersignal (S2) an die Kamera (12), die Kamera (12) nimmt ein weiteres Bild des Drahtes (19) auf und sendet ein Rücksignal (S3) Enthalten des Bildes an den Mikrocomputer (13), der die Bildeigenschaften erneut trennt, analysiert und die Markierung des Drahtes (19) identifiziert,
- im Falle einer wirksamen Identifizierung der Drahtmarkierung (19) sendet der Mikrocomputer (13) über die Peripheriegerätesteuerung (16) das Signal (S6) über die Identifizierung der Drahtmarkierung an die Signaleinrichtung (15) und dass die Signaleinrichtung (15) ein Signal (S7) über das Ende der Identifizierung des Markierungsvorgangs der Draht (19) abgibt.

2. Verfahren zur Identifizierung von Drahtmarkierungen nach Anspruch 1, **dadurch gekennzeichnet, dass** in der ersten Stufe die Felder der identifizierten Markierung ermittelt und im isolierten Bild des Drahts (19) unter Verwendung des ersten Deep Convolution Neural Network auf die Erkennung von Lücken trainiert werden Zwischen den Zeichen erfolgt die Identifizierung dieser Lücken im Drahtmarkierungsbild, und zwar so, dass:
- Der Mikrocomputer (13) verarbeitet das Bild des Drahtes (19) und isoliert die Komponentenbilder mit einer Größe von 32 x 32 Pixeln entlang des gesamten Bildes des Drahtes (19), die Eingangssignale für das neuronale Netzwerk sind, das ihre Übereinstimmung mit der Lücke zwischen ihnen bestimmt das Zeichenmuster, d. h. die Wahrscheinlichkeit, dass in der isolierten Position die Lücke zwischen den Zeichen auftritt, d. h. das gegebene Komponentenbild stellt die Lücke zwischen den Zeichen dar,
- die Analyse der Komponentenbildsignale beginnt mit dem Komponentenbild am linken Rand des Bildes des gesamten Drahtes (19) und wird mit dem Schritt von einem Pixel nach rechts des Bildes des gesamten Drahtes (19) fortgesetzt,
- Das neuronale Netzwerk, das darauf trainiert ist, Lücken zwischen Zeichen an Punkten der Lückenidentifizierung zu erkennen, gibt auf der Ausgabeebene einen Wahrscheinlichkeitswert nahe eins für einen Knoten zurück, der eine Lücke zwischen Zeichen darstellt, und an den anderen Stellen einen Wert nahe Null.

3. Verfahren zur Identifizierung von Drahtmarkierungen nach Anspruch 2, **dadurch gekennzeichnet, dass** in der zweiten Stufe im isolierten Bild des Drahtes (19) unter Verwendung des zweiten tiefen Faltungs-Neuronalen Netzwerks, das für die Zeichenerkennung trainiert wurde, die Identifizierung der Zeichen im erfolgt Die Bildmarkierung des Drahtes (19) erfolgt in der Weise, dass:
- Der Mikrocomputer (13) verarbeitet das Bild des Drahtes (19) und isoliert die Komponentenbilder mit einer Größe von 32 x 32 Pixeln entlang des gesamten Bildes des Drahtes (19), die Eingangssignale für das neuronale Netzwerk sind, das ihre Übereinstimmung mit den einzelnen Zeichen bestimmt Muster, das zum Erstellen von Drahtmarkierungen verwendet wird, d. h. die Wahrscheinlichkeit, dass an der isolierten Position das spezifische Zeichen auftritt, d. h. ein bestimmtes Komponentenbild repräsentiert das spezifische Zeichen,
- die Analyse der Komponentenbildsignale beginnt mit dem Komponentenbild am linken Rand des Bildes des gesamten Drahtes (19) und wird mit dem Schritt von einem Pixel nach rechts für das Bild des gesamten Drahtes (19) fortgesetzt,
- Das neuronale Netzwerk, das darauf trainiert ist, einzelne Zeichen für jedes Komponentenbild zu erkennen, gibt auf der Ausgabeebene einen Wahrscheinlichkeitswert für Knoten zurück, die bestimmte Zeichen darstellen, und spezifiziert das Vorkommen einzelner Zeichen an der Position des Bildes. Wenn erkannt wird, dass das Komponentenbild mit dem Muster eines bestimmten Zeichens übereinstimmt, wird auf der Ausgabeebene ein Wahrscheinlichkeitswert nahe eins für einen Knoten zurückgegeben, der dieses bestimmte Zeichen darstellt, und in den anderen Knoten, die andere Zeichen darstellen, wird ein Wert nahe Null zurückgegeben; Wenn das Komponentenbild jedoch kein Signal trägt, das ein bestimmtes Zeichen eindeutig identifiziert, werden für weitere Knoten der Ausgabeschicht die Werte zurückgegeben, die proportional zur Eignung des Signals in Bezug auf bestimmte Zeichen sind, die Summe der zurückgegebenen Werte in allen Ausgabeknoten für jedes Komponentenbild ist gleich eins,
- Nach Abschluss des Prozesses werden für alle Eingangssignale, d. h. für alle Komponentenbilder, Ergebnissignale ermittelt, die die Wahrscheinlichkeit des Auftretens bestimmter Zeichen an jeder Position entlang des Drahts (19) angeben, wobei die Position in Pixeln berechnet wird; Diese Signale werden durch Multiplizieren der Signale, die für bestimmte Ausgangsknoten des Netzwerks zum Erkennen von Zeichen bestimmt sind, mit Signalen, ergänzt um eins, bestimmt, die für diese Position für einen Knoten bestimmt sind, der die Lücke zwischen Zeichen im Netzwerk angibt, um Lücken zwischen Zeichen zu erkennen.

4. Verfahren zur Identifizierung von Drahtmarkierungen nach Anspruch 3, **dadurch gekennzeichnet, dass** in der dritten Stufe die in den vorherigen Schritten der Lücken- und Zeichenerkennung erzeugten Signale zur Identifizierung der Drahtmarkierung (19) auf diese Weise verwendet werden Das:
- der Mikrocomputer (13) verwendet Signale, die einen Satz zulässiger Markierungen für eine bestimmte Gruppe von Drähten darstellen, sogenannte Referenzsignale, die vom Mikrocomputer (13) im Arbeitsspeicher gespeichert sind,
- der Mikrocomputer (13) in vorherigen Stufen erzeugte Signale verwendet,
- Der Mikrocomputer (13) analysiert die Konsistenz der Signalsequenz aus den vorherigen Stufen mit den Referenzsignalen unter Verwendung der Maximum-Likelihood-Methode, d. h. des Maximum-Likelihood-Schätzers, wobei die Konsistenzanalyse die Korrektur der identifizierten Markierung im Falle einer möglicherweise falsch identifizierten Einzelheit ermöglicht Zeichen der Markierung, d. h. falsche Signale für bestimmte Positionen, die in vorherigen Schritten generiert wurden.

5. Verfahren zur Erkennung von Drahtmarkierungen nach einem der Ansprüche 1 bis 4, **dadurch gekennzeichnet, dass** die Helligkeit der LED-Scheinwerfer (10) mittels der Helligkeitssteuerung eingestellt wird.

6. Verfahren zum Erkennen von Drahtmarkierungen nach einem der Ansprüche 1 bis 5, **dadurch gekennzeichnet, dass** bei am linken Ende einer Drahtleitung (6) angeordneten LED-Scheinwerfern (10) die rechte Hälfte des Beobachtungsfeldes abgedeckt wird Die Kamera (12) wird in der Ebene der A-Drahtleitung (6) beleuchtet und mit den am rechten Ende der A-Drahtleitung (6) befindlichen LED-Scheinwerfern (10) wird die linke Hälfte des Beobachtungsfeldes der Kamera beleuchtet (12) in der Ebene der A-Drahtleitung (6) beleuchtet ist.

7. Verfahren zur Identifizierung von Leitungsmarkierungen nach einem der Ansprüche 11 bis 6, **dadurch gekennzeichnet, dass** eine akustische Signalvorrichtung (15) verwendet wird,

8. Verfahren zur Identifizierung von Drahtmarkierungen nach einem der Ansprüche 1 bis 7, **dadurch gekennzeichnet, dass** die Lichtsignaleinrichtung (15) in Form einer Diode ausgebildet ist.

9. Verfahren zur Identifizierung von Drahtmarkierungen nach einem der Ansprüche 1 bis 8, **dadurch gekennzeichnet, dass** ein mit einem Touchpanel ausgestatteter Monitor (4) verwendet wird.

10. Verfahren zur Identifizierung von Drahtmarkierungen nach einem der Ansprüche 1 bis 9, **dadurch gekennzeichnet, dass** die Steuersignale (S6, S10, S11) mittels der Peripheriegerätesteuerung (16) gesendet werden, die für die Helligkeit sorgt Einstellung, Ein- und Ausschalten der LED-Scheinwerfer (10), Ein- und Ausschalten der Signaleinrichtung (15), Ein- und Ausschalten des Monitors (4) und Übertragung von Signalen (S1) von den Sensoren (11) und Signalen (S12). ) vom Monitor-Touchpanel (4) zum Mikrocomputer (13).

11. Verfahren zur Identifizierung von Leitungsmarkierungen nach einem der Ansprüche 1 bis 10, **dadurch gekennzeichnet, dass** mindestens eine Kommunikationsschnittstelle verwendet wird, deren Buchse (17) an der Außenfläche einer der Wände (2a, 2b, 2c, 2d) des Gehäuses (1),

12. Verfahren zur Identifizierung von Leitungsmarkierungen nach einem der Ansprüche 1 bis 11, **dadurch gekennzeichnet, dass** zwischen den Geräteelementen und Systemen eine leitungsgebundene Kommunikation eingesetzt wird.

13. Verfahren zur Identifizierung von Leitungsmarkierungen nach einem der Ansprüche 1 bis 11, **dadurch gekennzeichnet, dass** ein Gerät verwendet wird, dessen Gehäuse (1) auf einer Plattform (20) montiert ist.

14. Verfahren zur Identifizierung von Leitungsmarkierungen nach einem der Ansprüche 1 bis 11, **dadurch gekennzeichnet, dass** eine Vorrichtung verwendet wird, bei der an den Unterkanten der Seitenwände (2a, 2b, 2c, 2d) des Gehäuses (1), an dem die LED-Scheinwerfer (10), eine Zuleitung (6) und Sensoren (11) montiert sind.

15. Verfahren zur Identifizierung von Leitungsmarkierungen nach einem der Ansprüche 1 bis 11, **dadurch gekennzeichnet, dass** eine Vorrichtung verwendet wird, bei der unter der Innenfläche der oberen Wand ein Regal (21) parallel zur Platte (5) angebracht wird ( 3), an dessen Bodenfläche eine Kamera (12) montiert ist.

## Revendications

1. Procédé d'identification de marquages de fils dans lequel des images numériques d'un fil sont prises, des images sont traitées, des caractéristiques d'images sont séparées et analysées, **caractérisé en ce que** dans le dispositif comportant le boîtier (1), la paroi supérieure (3) du qui est équipé d'un moniteur (4) incliné d'un angle de 12 à 18 degrés par rapport au plan horizontal du dispositif, à l'intérieur du boîtier (1), au-delà d'une caméra (12) de champ d'observation, reliée à la caméra (12 ), il y a un micro-ordinateur (13) avec une alimentation (14), un dispositif de signalisation (15) et le système (16) pour commander des dispositifs périphériques tels que : un ensemble d'éclairage de conduite, un moniteur (4), un dispositif de signalisation (15). et des capteurs (11), où à la partie inférieure des parois latérales (2a, 2b, 2c, 2d) du boîtier (1) est fixé un panneau longitudinal (5), au-dessus du panneau (5) parallèlement à lui et symétriquement dans le champ d'observation de la caméra (12), et perpendiculairement à l'axe d'observation de la caméra (O1), se trouve un fil conducteur (6) contenant les canaux de connexion droit et gauche (7a, 7b) et les lits de connexion droit et gauche (8a, 8b ), sur le bord de chaque lit de sonde (8a, 8b) au moins un capteur (11) est placé, et au-dessus de la sonde (6) à un angle d'au moins 10 et d'au plus 20 degrés par rapport à l'axe du conducteur (02) d'un fil il y a un ensemble d'éclairage constitué d'au moins deux paires de phares à LED (10) situés au dessus de chaque canal de conducteur (7a, 7b), et à son extrémité, symétriquement par rapport à chaque lit de conducteur (8a ,8b) et symétriquement par rapport à l'axe d'observation de la caméra (01), tandis que la distance de la caméra (12) par rapport à l'axe du fil (02) d'un fil est choisie pour que le champ d'observation de la caméra (12) couvre toute la longueur du fil conducteur (6) :
- un fil (19) est placé dans le guide-fil (6) de telle sorte que le marquage du fil (19) se trouve complètement dans le guide-fil (6) et pointe vers la caméra (12), où se trouve le milieu de l'axe de le fil d'alimentation (02) est situé sur l'axe d'observation de la caméra (O1) perpendiculaire à cet axe (O1),
- au moins un capteur (11) détecte le fil (19), active un signal concernant la présence d'un fil (51) et envoie un signal (S1b) via le système de commande des périphériques (16) au micro-ordinateur (13),
- le micro-ordinateur (13) reçoit le signal (51b) de la présence d'un fil et envoie un signal de commande (S2) à la caméra (12), qui prend une photo du fil (19) et transmet un signal de retour (S3 ) contenant l'image au micro-ordinateur (13),
- le microordinateur (13) sépare les caractéristiques de l'image, l'analyse et identifie le marquage du fil (19) ; au cours de la première étape, les champs du marquage identifié sont déterminés et dans l'image isolée du fil (19) à l'aide du premier réseau neuronal à convolution profonde, entraîné à reconnaître les espaces entre les caractères, l'identification de ces espaces a lieu dans l'image du fil (19), dans la deuxième étape de l'image isolée du fil (19) à l'aide du deuxième réseau neuronal à convolution profonde, entraîné à reconnaître des caractères, l'identification de ces caractères a lieu dans l'image du marquage du fil (19), et dans les signaux de troisième étape (54, 55) générés dans les étapes précédentes lors de l'identification des espaces et des caractères, sont utilisés pour identifier le marquage du fil (19),
- en cas d'identification inefficace du marquage du fil (19), le micro-ordinateur (13) envoie à la caméra (12) un signal de commande (S2), la caméra (12) prend une autre photo du fil (19) et transmet un signal de retour (S3) contenant l'image au micro-ordinateur (13), qui sépare à nouveau les caractéristiques de l'image, l'analyse et identifie le marquage du fil (19),
- en cas d'identification effective du marquage du fil (19), le micro-ordinateur (13) envoie au dispositif de signalisation (15) via le système de commande des périphériques (16) le signal (S6) concernant l'identification du marquage du fil et le dispositif de signalisation (15) émet un signal (S7) concernant la fin du processus de marquage d'identification du fil (19).

2. Procédé d'identification de marquages de fils selon la revendication 1, **caractérisé en ce que** dans la première étape les champs de marquage identifiés sont déterminés et dans l'image isolée du fil (19) à l'aide du premier réseau neuronal à convolution profonde, entraîné à reconnaître les espaces entre caractères, l'identification de ces espaces s'effectue dans l'image de marquage des fils, de telle sorte que :
- le micro-ordinateur (13) traite l'image du fil (19) et isole les images composantes d'une taille de 32 x 32 pixels sur toute l'image du fil (19), qui sont des signaux d'entrée pour le réseau neuronal, qui détermine leur cohérence avec l'écart entre le modèle de caractères, c'est-à-dire la probabilité qu'en position isolée, l'écart entre les caractères se produise, c'est-à-dire que l'image composante donnée représente l'écart entre les caractères,
- l'analyse des signaux images composantes commence par l'image composante sur le bord gauche de l'image du fil entier (19) et se poursuit par le pas d'un pixel à droite de l'image du fil entier (19),
- le réseau de neurones entraîné à reconnaître les écarts entre caractères aux points d'identification des écarts renvoie une valeur de probabilité proche de un au niveau de la couche de sortie pour un noeud représentant un écart entre caractères, et aux autres endroits une valeur proche de zéro.

3. Procédé d'identification de marquages de fils selon la revendication 2, **caractérisé en ce que** dans la deuxième étape, dans l'image isolée du fil (19), à l'aide du deuxième réseau neuronal à convolution profonde entraîné pour la reconnaissance de caractères, l'identification des caractères dans le l'image de marquage du fil (19) s'effectue, de telle sorte que :
- le micro-ordinateur (13) traite l'image du fil (19) et isole les images composantes d'une taille de 32 x 32 pixels sur toute l'image du fil (19), qui sont des signaux d'entrée pour le réseau neuronal, qui détermine leur cohérence avec les caractères individuels motif, utilisé pour créer des marquages de fils, c'est-à-dire la probabilité que dans la position isolée le caractère spécifique apparaisse, c'est-à-dire qu'une image de composant donnée représente le caractère spécifique,
- l'analyse des signaux images composantes commence par l'image composante sur le bord gauche de l'image du fil entier (19) et se poursuit par le pas d'un pixel vers la droite pour l'image du fil entier (19),
- le réseau neuronal entraîné à reconnaître des caractères individuels pour chaque image composante renvoie une valeur de probabilité au niveau de la couche de sortie pour les noeuds représentant des caractères particuliers, spécifiant l'apparition de caractères individuels dans la position de l'image ; si l'image du composant est reconnue comme cohérente avec le motif d'un caractère particulier, une valeur de probabilité proche de un est renvoyée au niveau de la couche de sortie pour un nœud représentant ce caractère particulier ; et dans les autres noeuds, représentant d'autres caractères, une valeur proche de zéro est renvoyée ; cependant, si l'image du composant ne transporte pas de signal identifiant clairement un caractère spécifique, alors pour plusieurs noeuds de la couche de sortie, les valeurs proportionnelles à l'adéquation du signal sont renvoyées par rapport à des caractères particuliers ; la somme des valeurs renvoyées dans tous les noeuds de sortie pour chaque image composante est égale à un,
- après avoir terminé le processus pour tous les signaux d'entrée, c'est-à-dire pour toutes les images composantes, des signaux de résultat sont déterminés en spécifiant la probabilité d'apparition de caractères particuliers dans chaque position le long du fil (19), position calculée en pixels ; ces signaux sont déterminés en multipliant les signaux désignés pour des noeuds de sortie particuliers du réseau pour reconnaître des caractères avec des signaux, complétés par un, désignés pour cette position pour un nœud spécifiant l'espace entre les caractères dans le réseau pour reconnaître les espaces entre les caractères.

4. Procédé d'identification de marquages de fils selon la revendication 3, **caractérisé en ce que** dans la troisième étape, les signaux, générés dans les étapes précédentes d'identification des espaces et des caractères, sont utilisés pour identifier le marquage du fil (19), de telle manière que:
- le microordinateur (13) utilise des signaux représentatifs d'un ensemble de marquages admissibles pour un groupe de fils donné, dits signaux de référence, stockés par le microordinateur (13) dans la mémoire d'exploitation,
- le microordinateur (13) utilise les signaux générés aux étapes précédentes,
- le micro-ordinateur (13) analyse la cohérence de la séquence de signaux des étapes précédentes avec les signaux de référence, en utilisant la méthode du maximum de vraisemblance, c'est-à-dire l'estimateur du maximum de vraisemblance, où l'analyse de cohérence permet de corriger le marquage identifié en cas de particulier éventuellement mal identifié caractères du marquage, c'est-à-dire des signaux erronés pour des positions spécifiques générés lors des étapes précédentes.

5. Procédé d'identification de marquages filaires selon l'une quelconque des revendications 1 à 4, **caractérisé en ce que** la luminosité des phares à LED (10) est réglée au moyen du système de contrôle de la luminosité.

6. Procédé d'identification de marquages de fils selon l'une quelconque des revendications 1 à 5, **caractérisé en ce qu'**avec les phares à LED (10) situés à l'extrémité gauche du fil conducteur (6), la moitié droite du champ d'observation de la caméra (12) est éclairée dans le plan du fil conducteur (6) et, avec les phares à LED (10) situés à l'extrémité droite du fil conducteur (6), la moitié gauche du champ d'observation de la caméra (12) dans le plan du fil conducteur (6) est éclairé.

7. Procédé d'identification de marquages de fils selon l'une quelconque des revendications 11 à 6, **caractérisé en ce qu'**un dispositif de signalisation sonore (15) est utilisé.

8. Procédé d'identification de marquages de fils selon l'une quelconque des revendications 1 à 7, **caractérisé en ce que** le dispositif de signalisation lumineuse (15) se présente sous la forme d'une diode.

9. Procédé d'identification de marquages de fils selon l'une quelconque des revendications 1 à 8, **caractérisé en ce qu'**un moniteur (4) équipé d'un écran tactile est utilisé.

10. Procédé d'identification de marquages de fils selon l'une quelconque des revendications 1 à 9, **caractérisé en ce que** les signaux de commande (S6, S10, S11) sont envoyés au moyen du système de contrôle des périphériques (16), qui assure la luminosité réglage, allumage et extinction des phares à LED (10), allumage et extinction du dispositif de signalisation (15), allumage et extinction du moniteur (4) et transfert des signaux (S1) des capteurs (11) et signaux (S12 ) du panneau tactile du moniteur (4) au micro-ordinateur (13).

11. Procédé d'identification de marquages filaires selon l'une quelconque des revendications 1 à 10, **caractérisé en ce qu'**on utilise au moins une interface de communication dont la prise (17) est fixée sur la surface extérieure d'une des parois (2a, 2b, 2c, 2d) du boîtier (1).

12. Procédé d'identification de marquages de fils selon l'une quelconque des revendications 1 à 11, **caractérisé en ce qu'**une communication filaire est utilisée entre les éléments du dispositif et les systèmes.

13. Procédé d'identification de marquages de fils selon l'une quelconque des revendications 1 à 11, **caractérisé en ce qu'**on utilise un dispositif dont le boîtier (1) est monté sur une plateforme (20).

14. Procédé d'identification de marquages de fils selon l'une quelconque des revendications 1 à 11, **caractérisé en ce qu'**on utilise un dispositif dans lequel un échafaudage (22) est monté sur les bords inférieurs des parois latérales (2a, 2b, 2c, 2d) du boîtier (1), sur lequel sont montés les phares à LED (10), un câble (6) et des capteurs (11).

15. Procédé d'identification de marquages filaires selon l'une quelconque des revendications 1 à 11, **caractérisé en ce qu'**on utilise un dispositif dans lequel une étagère (21) est réalisée parallèlement au panneau (5) sous la surface intérieure de la paroi supérieure ( 3), sur laquelle est montée une caméra (12).
